# EUROPEAN PATENT APPLICATION

(11) **EP 4 603 341 A1**
(43) Date of publication of application: **20.08.2025**
(21) Application number: 24157927.5
(22) Date of filing: 15.02.2024
(51) Int. Cl.: B60S 1/34

(54) **A WINDSCREEN WIPER ARM, A VEHICLE AND A METHOD FOR ASSEMBLING THE WIPER ARM**

(71) Applicant: Valeo Systèmes d'Essuyage, 78322 Le Mesnil Saint Denis (FR)
(72) Inventor: OSTROGORSKI, Tomasz, 32 050 Skawina (PL)
(74) Representative: Valeo Visibility

(57) **Abstract**

The present invention relates to a wiper arm (10) for driving a wiper blade, comprising: an arm head (12) having a top face (121), a bottom face and an orifice (18) through the top and bottom faces; a fluid circulation hose (16) extending between the top face (121) and the bottom face of the arm head (12) through the orifice (18); a clip (20) for securing the fluid circulation hose through the orifice, the clip immobilizing the hose (16) within the orifice (18) in a fixed orientation with respect to the top face (121). The invention also relates to a vehicle and a method for assembling the wiper arm.

## Description

### Technical field

The invention pertains to a wiper arm for driving a wiper blade and a vehicle with a wiper system. The invention also relates to a method for assembling the wiper arm.

### Prior art

Document EP2883761 discloses a clip for fixing a fluid circulation hose to a wiper arm for driving a windscreen wiper blade of a vehicle, comprising means for retaining the hose and means for fixing the hose to the wiper arm. The drawback of this configuration is that the extension of the hose between the wiper arm and the vehicle interferes with the wiper arm movements.

It is thus desirable to develop a wiper arm that avoids, or at least reduces, the disadvantageous aspects of this configuration.

### Disclosure of the invention

According, therefore, to a first aspect, the invention is directed towards a wiper arm for driving a wiper blade, comprising an arm head having a top face, a bottom face, and an orifice extending through the top and bottom faces; a fluid circulation hose extending between the top face and the bottom face of the arm head through the orifice; and a clip for securing the fluid circulation hose within the orifice, the clip immobilizing the hose within the orifice in a fixed orientation with respect to the top face.

Preferably, the clip is immobile in rotation with respect to the arm head.

Preferably, one of the arm head or the clip comprises at least one cutout and the other of the arm head or the clip comprises at least one rib, the clip immobilizing the hose within the orifice in a fixed orientation with respect to the top face due to the engagement of the rib within the cutout.

Preferably, one of the arm head or the clip comprises at least two cutouts, more preferably exactly two cutouts, the clip immobilizing the hose within the orifice in a fixed orientation with respect to the top face by the engagement of the at least one rib within a corresponding one of the cutouts, the orientation being a function of the cutout into which the rib is engaged.

More preferably, the at least one cutout is positioned around a perimeter of the orifice, the position of said at least one cutout determining and being a function of an intended orientation of the fluid circulation hose with respect to the top face of the arm head.

In a possible variation, the arm head comprises the at least one cutout on the perimeter of the orifice and the clip comprises the at least one rib.

In a possible variation, the clip further comprises a channel guiding the hose out of the orifice with respect to the top face of the arm head and/or arms guiding the hose out of the orifice with respect to the bottom face of the arm head.

In a possible variation, the clip further comprises clamping means to fasten the clip to the arm head by pressing the bottom face of the arm head.

In a possible variation, the clip further comprises at least one lug for stabilizing the clip with respect to the arm head.

In a possible variation, the fluid circulation hose is provided with a fluid connector supported at a hose extremity, the orifice being dimensioned such that the connector is suitable to pass through the orifice.

Preferably, the wiper arm is a pre-assembled assembly.

According to a second aspect, the invention is directed towards a vehicle comprising a wiper system having a wiper arm as described above.

Preferably, the arm head comprises two cutouts and the clip comprises a rib, the clip immobilizing the hose within the orifice in a fixed orientation with respect to the top face due to the engagement of the rib within one of the cutouts, the orientation being a function of the cutout into which the rib is engaged.

According to a third aspect, the invention is directed towards a method for assembling a wiper arm according to the above, comprising the steps of providing a wiper arm having an arm head and an orifice extending through the arm head, providing a fluid circultation hose having a fluid connector supported at an extremity of the hose, and providing a clip for securing the fluid circulation hose through the orifice; fixing the fluid circulation hose to a bottom face of the arm head by starting with the extremity of the hose that is free of the fluid connector; passing the connector and the extremity of the hose supporting the connector through the orifice towards a face of the arm head; and fixing the clip to the arm head such that the clip immobilizes the hose within the orifice in a fixed orientation with respect to the top face.

In a possible embodiment, the arm head comprises two cutouts and the clip comprises a rib, the clip immobilizing the hose within the orifice in a fixed orientation with respect to the face as a function of the engagement of the rib within one of the cutouts, the cutout within which the rib is engaged depending on whether the vehicle is a left-hand-drive or a right-hand-drive vehicle.

In the framework of this document, the use of the indefinite article "a", "an" or the definite article "the" to introduce an element does not exclude the presence of a plurality of these elements. In this document, the terms "first", "second", "third" and the like are solely used to differentiate elements and do not imply any order in these elements.

In the framework of the present document, the use of the verbs "comprise", "include", "involve" or any other similar variation, as well as their conjugational forms, cannot exclude the presence of elements other than those mentioned. When the verb "comprise" is used for defining an interval by the terms "comprised between" two values, these two values should not be interpreted as excluded from the interval.

All the embodiments of the wiper arm and the advantages of these embodiments apply mutatis mutandis to the present vehicle and vice versa.

### Brief description of the figures

Other characteristics and advantages of the present invention will appear on reading the following detailed description, for the understanding of which, it is referred to the attached figures where:
- Figure 1 illustrates a wiper arm according to the invention;
- Figure 2 illustrates a detail of the wiper arm of figure 1;
- Figure 3 illustrates a perspective view of a clip according to the invention;
- Figure 4 illustrates another perspective view of the clip of figure 3;
- Figure 5 illustrates another perspective view of the clip of figure 3; and
- Figure 6 illustrates a bottom view of the wiper arm of figure 1.

The drawings in the figures are not scaled. Similar elements can be assigned by similar references in the figures. In the framework of the present document, identical or analogous elements may have the same references. The presence of reference numbers in the drawings cannot be considered as limiting, in particular if these numbers are indicated in the claims.

### Description of specific embodiments of the invention

Description of preferred embodiments of the present invention are hereafter described with references to figures, but the invention is not limited by these references. In particular, the drawings or figures described below are only schematic and are not limiting in any way.

A wiper arm is presently described for driving a wiper blade. The wiper arm comprises an arm head having a top face, a bottom face and an orifice through the top and bottom faces. The wiper arm further comprises a fluid circulation hose extending between the top face and the bottom face of the arm head, through the orifice. A clip of the wiper arm secures the fluid circulation hose through the orifice. The clip immobilizes the hose within the orifice in a fixed orientation with respect to the top face. Thanks to the clip fixing the orientation of the hose with respect to the arm head, the hose does not follow a random orientation in function of the wiper arm movement but a given orientation defined during assembly of the wiper arm. Thus, the hose does not interfere with the wiper arm movements.

Figure 1 illustrates a wiper arm 10 according to the invention. The wiper arm 10 is part of a wiper system not shown on the figures. The wiper system has the function of wiping a glazed surface of a vehicle, for instance windscreen of the vehicle. Such a wiper system further comprises a wiper blade (not shown) driven in motion by the wiper arm 10. The wiper blade is applied against the surface to be cleaned.

The wiper arm 10 is driven in motion at one 101 of its ends by drive means, and drives in turn the wiper blade in reciprocating motion at its other end. The wiper system moves back and forth so that the wiper blade wipes the surface. The reciprocating motion can be translational, rotational or a combination of translational and rotational motions.

The wiper system is movable between a rest position and an end position. For example, the wiper system is movable between a rest position in which the wiper blade and the wiper arm 10 are at the foot of the surface, the windshield for example, substantially along an upper edge of a vehicle hood (and transverse to the direction of vehicle travel) and an end position in which the wiper blade and the wiper arm are upright (and are substantially in the direction of vehicle travel).

The wiper system is for example of the "wet arm"-type. In other words, such a wiper system allows the projection of a cleaning fluid from the wiper arm and/or wiper blade onto the surface to be cleaned - as opposed to projecting the cleaning fluid from a fixed point, such as a fixed point or points at the foot of the windshield. The advantage of spraying cleaning fluid from the wiper arm and/or wiper blade is that the fluid is directed precisely onto the surface to be cleaned, for example, just in front of the wiper blade in function of the direction of motion. This allows for better control of the amount of fluid needed. Assuming that the surface to be cleaned is the windshield of the vehicle, this also avoids reducing the visibility of the driver at the time of spraying the fluid.

As illustrated in Figure 1, at its end 101 in connection with the drive means, the wiper arm 10 includes an arm head 12. The arm head 12 includes a drive means shaft hole 14. In the embodiment shown in Figure 1, the wiper system is driven in a rotational motion about the drive means shaft extending into the hole 14. The arm head 12 has a top face 121 and a bottom face 122. The bottom face 122 faces the surface to be cleaned and the top face 121 is opposite the bottom face 122. The top face 121 is visible from outside the vehicle.

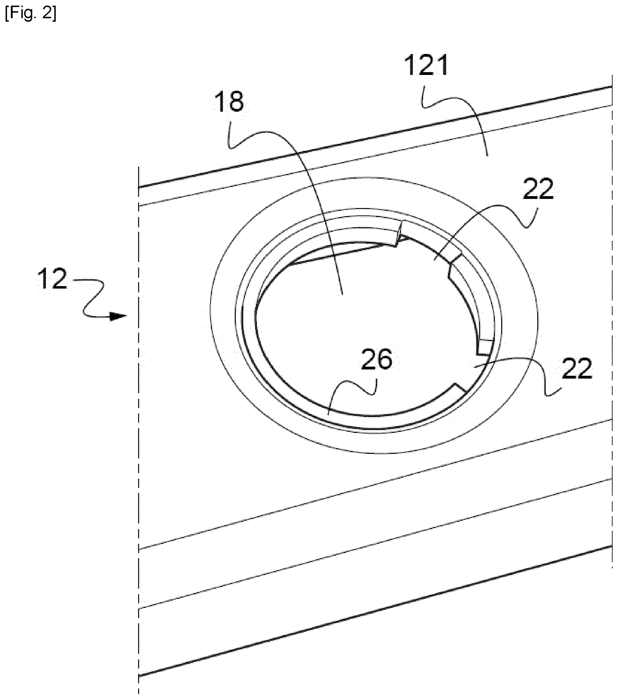

Furthermore, as shown in figure 2, which illustrates a detail of the wiper arm 10 of figure 1, the arm head 12 may also include an orifice 18 through the top face 121 and the bottom face 122. The orifice 18 allows passage from one face to the other. The orifice 18 extends along an axis transverse to the surface to be cleaned. The orifice 18 is preferably through. The orifice 18 is preferably separate from the hole 14 for the drive means shaft. In other words, the orifice 18 allows passage from one face to the other without disturbing the connection of the arm head 12 to the drive means. This allows the arm head 12 to be attached to the drive means in a simple manner.

To circulate the cleaning fluid to the end of the wiper arm supporting the wiper blade - or even to the wiper blade -, the wiper arm 10 comprises a fluid circulation hose 16. The hose 16 allows the fluid to be circulated from a cleaning fluid tank, for example in the vehicle, to the holes spraying the fluid onto the surface to be cleaned, located on the wiper arm and/or the wiper blade. The hose 16 adapts to the movements of the wiper system. The hose 16 is preferably flexible to accompany the back-and-forth movement of the arm head 12. The hose 16 allows fluid to be circulate to the end of the wiper arm - or even to the wiper blade - along the bottom face 122 to be protected along the wiper arm and for aesthetic reasons. To access the bottom face 122, the hose 16 can extend between the top face 121 and the bottom face 122 of the arm head 12 through the orifice 18. The advantage of extending through the arm head 12 from one face to the other is that the hose 16 is less stressed during wiper system movements and/or in the rest position of the wiper system than if the hose 16 reached the bottom face 122 laterally of the arm head 12.

The wiper arm 10 also comprises a clip 20 for securing the fluid circulation hose 16 through the orifice 18. The clip 20 is used to hold the hose 16 in position through the orifice 18. The clip 20 secures the hose 16 longitudinally through the orifice 18. More precisely, the clip 20 immobilizes the hose 16 within the orifice 18 in a fixed orientation with respect to the top face 121. A fixed orientation allows the hose 16 to be positioned with respect to the vehicle and the arm head 12 so as not to interfere with the wiper arm 10 movements. In other words, positioning the hose 16 in a fixed orientation allows the path of the hose 16 between the vehicle and the arm head 12 to be defined without random deformation of the hose 16 changing that path over time. The part of the hose 16 extending between the orifice 18 and the vehicle is referred to as the "active loop."

The fixed orientation within the orifice 18 of the hose 16 with respect to the top face 121 makes it possible for the active loop to move together with the head arm - ensuring a proper movement of the wiper system. This allows a hose path to be defined considering the space requirement around the arm head 12 at the end 101 of the wiper arm 10. Another advantage is that the clip 20 can be used as a standard part because one controls the output angle of the hose 16, out of the orifice 18 towards the top face 121. The fixed orientation can be easily set to different types of wiper systems.

In a preferred embodiment, the clip 20 is immobile in rotation with respect to the arm head 12. The clip 20 is locked in a specific orientation with respect to the arm head 12. Immobilizing the clip 20 in rotation simplifies the positioning of the hose 16 in a fixed orientation with respect to the top face 121.

One of the arm head 12 or the clip 20 may comprise at least one cutout 22 and the other of the arm head 12 or the clip 20 comprises at least one rib 24. The clip 20 immobilizes the hose 16 within the orifice 18 in a fixed orientation with respect to the top face 121 due to the engagement of the rib 24 within the cutout 22.

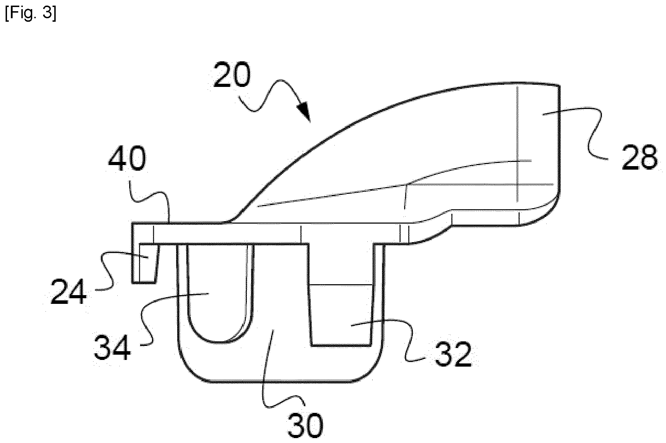

According to the non-limiting example of figure 2 and of figure 3 illustrating a perspective view of the clip 20, the cutout 22 is made on the arm head 12 and the rib 24 is made on the clip 20. The clip 20 is inserted into the orifice 18 allowing the rib 24 to engage the cutout 22. Once the rib 24 is engaged in the cutout 22, the clip 20 is locked in position in the orifice 18. The rib 24 fits securely into the cutout 22.

Over time, the cooperation of the rib 24 and the cutout 22 holds the clip 20 in position and ensures the fixed orientation of the hose 16 relatively to the top face 121. The cooperation of the rib 24 with the cutout 22 is accomplished by interlocking the rib 24 with the cutout 22. The rib 24 and the cutout 22 are complementary in size, one conforming to the other to secure the clip 20 in position.

One of the arm head 12 or the clip 20 may comprise at least two cutouts 22, the clip 20 immobilizing the hose 16 within the orifice 18 in a fixed orientation with respect to the top face 121 due to the engagement of the rib 24 within one of the cutouts 22. The orientation is function of the cutout 22 into which the rib 24 is engaged. The cutouts 22 are angularly spaced apart. This allows several possible fixed orientations between the hose 16 and the top face 121 to be defined in a simple manner. This allows the arm head 12 to be used on different types of vehicles, depending on the space requirement around the arm head 12 at the end 101 of the wiper arm 10. In particular, two cutouts 22 can be provided. This allows the same wiper arm 10 and the same clip 20 to be used e.g. on different models or variants of vehicles, for instance for a left-hand drive vehicle or a right-hand drive vehicle.

According to the non-limiting example of figures 2 and 3, two cutouts 22 are made on the arm head 12 and the rib 24 is made on the clip 20. The two cutouts 22 are angularly spaced apart The clip 20 is inserted into the orifice 18 with a given circular orientation with respect to the orifice 18 allowing the rib 24 to engage into one of the two cutouts 22 of choice. Once the rib 24 is engaged in the desired cutout 22, the clip 20 is locked in position in the orifice 18 and the hose 16 is in a fixed orientation. The choice of engagement of the rib 24 into either cutout 22 is notably in function of the use of the wiper arm on a left-hand drive vehicle or a right-hand drive vehicle, as mentioned above.

The cutout(s) 22 may be positioned around a perimeter 26 of the orifice 18 according to the orientation to be given to the fluid circulation hose 16 with respect to the top face of the arm head 12. The perimeter 26 is surrounding the orifice 18. In other words, the arm head 12 comprises one or several cutouts 22 located around the edge of the orifice 18, angularly spaced apart. As a result, fabrication of the arm head 12 is simple. Preferably, two cutouts 22 are positioned around the perimeter 26 - for the advantages mentioned above. The cutouts 22 may be in the top face 121, such as notches opening into the orifice 18. Preferably, the arm head 12 may include a lip defining the perimeter 26 of the orifice 18. The lip protrudes into the orifice 18. The cutouts 22 may be in the lip. The cutouts 22 may be notches in the lip, opening into the orifice 18. The cutout(s) 22 is/are positioned according to the fixed orientation to be given to the hose 16 with respect to the top face 121. In the example of the figures the arm head 12 comprises the cutout(s) 22 on the perimeter of the orifice and the clip 20 comprises the rib 24.

The cutout(s) 22 may be formed in the arm head 12 by many different fabrication methods, as appropriate to the material and construction of the arm head, and the dimensions and form of the cutout(s) 22. For instance, the cutout(s) 22 may be moulded into the arm head 12, or formed by e.g. machining, broaching, punching, etc.

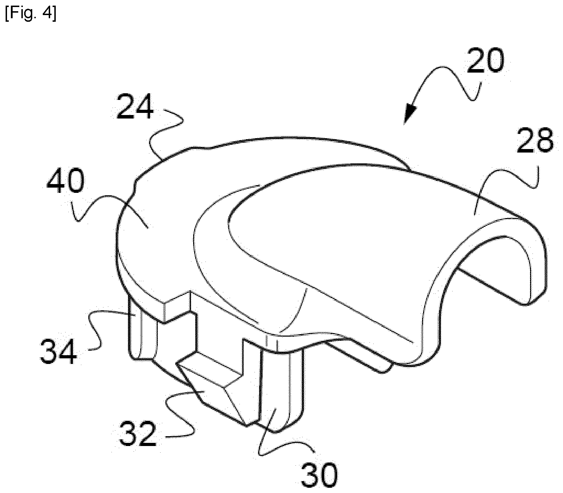

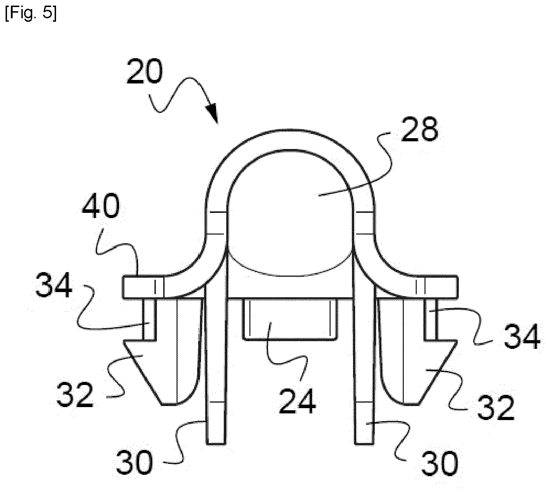

Figures 3 to 5 illustrate perspective views of the clip 20. The clip 20 may include a channel 28 guiding the hose 16 out of the orifice 18 with respect to the top face 121 of the arm head 12. The channel 28 helps to press the hose 16 toward the top face 121 and limits the extension of the hose 16 beyond the top face 121. The channel 28 helps to immobilize the hose 16 within the orifice 18 in a fixed orientation with respect to the top face 121. In addition, the channel 28 helps to limit the bulk of the hose 16 transversely to the top face 121. This improves the aerodynamics of the arm head 12. Furthermore, the clip 20 may include arms 30 guiding the hose 16 out of the orifice 18 with respect to the bottom face 122 of the arm head 12. The arms 30 may extend on either side of the hose 16. The arms 30 allow the hose 16 to be oriented with respect to the bottom face 122. The arms 30 prevent the hose 16 from being pinched on the bottom face 122, and thus improve the flow of fluid along the hose 16. The clip 20 may therefore include the channel 28 orienting the hose 16 on the top of the arm head 12 - on the top face 121 - and/or may include the arms 30 orienting the hose 16 on the bottom of the arm head 12 - on the bottom face 122. The channel 28 and the arms 30 may guide the path of the hose 16 between the top face 121 and the bottom face 122.

The clip 20 may further comprise clamping means 32 to fasten the clip 20 to the arm head 12, thereby securing the clip 20 in the orifice 18 to prevent its removal over time. Preferably, the clamping means fasten the clip 20 by pressing the bottom face 122 of the arm head 12. The clamping means 32 may be resilient members in the form of springs. The clamping means 32 are hinged to allow the clip 20 to be inserted into the orifice 18 and to allow the bottom face 122 to be pressed once the clip is in position in the orifice. The clamping means 32 may cooperate with the perimeter 26 of the orifice 18 to hold the clip 20 in the orifice 18. If desired, the clamping means 32 may grip the lip defining the perimeter of the orifice 18. The clip 20 may include two clamping means 32, on opposite sides of the hose 16 passage in the clip 20. The clamping means are, for example, diametrically opposed in the orifice 18. In the orifice 18, the clamping means 32 are for example further outside the arms 30 - if any. The clamping means 32 holds the hose 16 in position over time, but also allows the clip 20 to be removed from the orifice 18, for example for maintenance purposes. Furthermore, the clamping means 32 are at a distance from the rib 24 so as to ensure the stability of the clip 20 in position in the orifice 18 and not to hinder the respective operation of the rib and the clips.

The clip 20 may further comprise lugs 34 for stabilizing the clip 20 with respect to the arm head 12. The lugs 34 may cooperate with the perimeter 26 of the orifice 18 - or even with the lip if any. The lugs 34 stabilize the clip 20 in the plane of the top face 121. Two lugs 34 may be provided. A lug 34 may be positioned between each clamping means 32 and the rib 24.

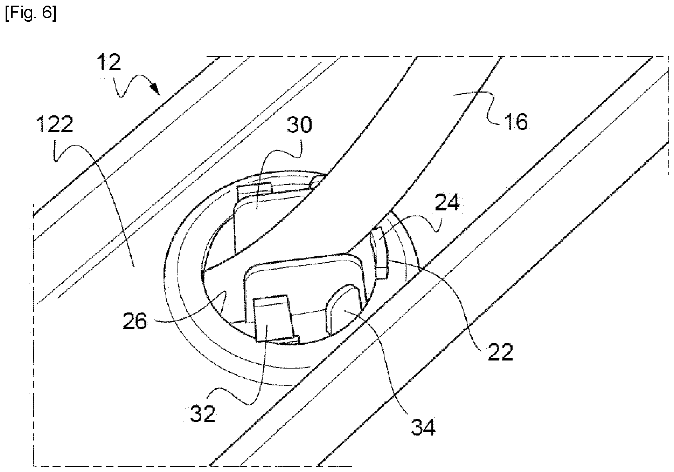

Figure 6 illustrates a bottom view of the wiper arm 10 of figure 1. The hose 16 protrudes from the orifice 18 towards the end of the wiper arm carrying the wiper blade. The rib 24 cooperates with a cutout 22 on the perimeter 26 of the orifice 18. The clamping means 32 fasten the clip 20 to the arm head 12 by pressing the bottom face 122 of the arm head 12. The lugs 34, if any, stabilize the clip 20 with respect to the arm head 12. The arms 30 guide the hose 16 out of the orifice 18 with respect to the bottom face 122 of the arm head 12. Thus, the clip 20 may comprise the channel 28 protruding from the top face 121 and may comprise the rib 24, the clamping means 32, the lugs 34 and the arms 30 - if any - protruding from the bottom face 122. The clip may further comprise an interface 40 supporting the channel 28 on the one hand and the rib 24, the clamping means 32, the lugs 34 and the arms 30 - if any - on the other hand. The interface 40 also ensures the stability of the clip 20 in position.

The fluid circulation hose 16 may be provided with a fluid connector 42. The fluid connector 42 allows the hose 26 to be connected to a cleaning fluid tank. The fluid connector 42 is supported at a hose extremity 161 (the other hose extremity being at the end of the wiper arm supporting the wiper blade). The orifice 18 may be dimensioned such that the fluid connector 42 is suitable to pass through the orifice 18. The orifice diameter is large enough so that the fluid connector 42 can go through the orifice 18 of the arm head 12. The arm head 12 thus simplifies the overall assembly because there is no need to assembly the fluid connector 42 after the hose 16 is passed through the orifice 18 of the arm head 12. Time consuming tests of connector tightness can be done before assembly of the hose 16 on wiper arm 10 - what simplifies the tightness tests and the method for assembling the wiper arm 10.

Advantageously, the wiper arm 10 is a pre-assembled assembly which facilitates the final assembly of the wiper system on a vehicle. The wiper arm 10 may be supplied as a pre-assembled assembly comprising, inter alia, the arm head 12, the hose 16 through the orifice 18 with the clip 20 holding the hose 16 in a fixed orientation with respect to the top face 121. The assembly may also comprise the remainder of the wiper arm 10 and the wiper blade supported by the end of the wiper arm. The hose 16 may further be connected so as to feed the orifice spraying the fluid onto the surface to be cleaned. Further, the wiper arm 10 defining a pre-assembled assembly is defined so as to be mounted on a left hand drive or a right hand drive vehicle.

A vehicle is also presently described. The vehicle comprises a wiper system with the wiper arm 10. The arm head 12 may comprise two cutouts 22 and the clip 20 may comprise the rib 24, the clip 20 immobilizing the hose 16 within the orifice 18 in a fixed orientation with respect to the top face 121 due to the engagement of the rib 24 within one of the cutouts 22. The orientation is function of the cutout into which the rib is engaged. The wiper system can be easily adapted to a left hand drive or a right hand drive vehicle - what simplifies the manufacturing of the vehicle.

A method for assembling the wiper arm is also described. The method comprises the following steps. A wiper arm 10 having an arm head 12 and an orifice 18 through the arm head 12 is provided as well as a fluid circulation hose 16 having a fluid connector 42 supported at an extremity 161 of the hose. A clip 20 for securing the fluid circulation hose 16 through the orifice 18 is also provided. Then, the fluid circulation hose 16 is fixed to a bottom face 122 of the arm head 12 by starting with the extremity of the hose 16 that is free of the fluid connector 42. The fluid connector 42 and the extremity 161 of the hose supporting the fluid connector are passed through the orifice 18 towards a top face 121 of the arm head 12. The clip 20 is then fixed to the arm head such that the clip immobilizes the hose out of the orifice in a certain direction with respect to the top face. The method of assembling is thus made simple.

In addition, in function of the dimension of the fluid connector 42, the arm head 12 is provided with and orifice 18 having a diameter allowing the fluid connector 42 to pass through the orifice 18. It is thus simple to adapt the arm head 12 to number of vehicle types.

According to the method of assembly, the arm head 12 may comprise two cutouts 22 and the clip 20 may comprise the rib 24, the clip immobilizing the hose within the orifice 18 in a fixed orientation with respect to the top face 121 in function of the engagement of the rib 24 within one of the cutouts 22. The cutout 22 within which the rib 24 is engaged depends on whether the vehicle is a left hand drive or a right hand drive vehicle. The assembly method can be adapted to both types of vehicles.

Furthermore, the clip 20 is easy to manufacture. For example, the clip 20 may be obtained by a moulding process. The moulding process can be done by injection moulding, with the particularly advantageous aspect that the injection moulding process may be performed using moulds without sliders. This significantly decreases the cost of tooling - and thus decreases the cost of the arm head.

The present invention has been described in relation to the specific embodiments which have a value that is purely illustrative and should not be considered to be limiting. The various parts or elements herein described, and in particular their respective embodiments and advantages, may be considered independently of each other.

For example, the clip 20, the arm head 12 and the hose 16 may form an assembly but the clip 20 may also be considered in isolation, independently of the arm head 12 and the hose 16. The same applies to the arm head 12, which can be considered in isolation, independently of the clip 20 and the hose 16. The same applies to the hose 16, which can be considered in isolation, independently of the clip 20 and the arm head 12.

The skilled person will notice that the invention is not limited to the examples that are illustrated and/or described here above. The invention comprises each of the new technical characteristics described in the present document, and their combinations.

## Claims

1. A wiper arm (10) for driving a wiper blade, comprising
• an arm head (12) having a top face (121), a bottom face (122) and an orifice (18) extending through the top and bottom faces ;
• a fluid circulation hose (16) extending between the top face (121) and the bottom face (122) of the arm head (12) through the orifice (18); and
• a clip (20) for securing the fluid circulation hose within the orifice, the clip immobilizing the hose (16) within the orifice (18) in a fixed orientation with respect to the top face (121).

2. The wiper arm (10) according to claim 1, wherein the clip (20) is immobile in rotation with respect to the arm head (12).

3. The wiper arm (10) according to claim 1 or 2, wherein one of the arm head (12) or the clip (20) comprises at least one cutout and the other of the arm head (12) or the clip (20) comprises at least one rib, the clip immobilizing the hose (16) within the orifice (18) in a fixed orientation with respect to the top face (121) due to the engagement of the rib within the cutout.

4. The wiper arm (10) according any one of claims 1 to 3, wherein one of the arm head (12) or the clip (20) comprises at least two cutouts, preferably exactly two cutouts, the clip immobilizing the hose (16) within the orifice (18) in a fixed orientation with respect to the top face (121) by the engagement of the at least one rib within a corresponding one of the cutouts, the orientation being a function of the cutout into which the rib is engaged.

5. The wiper arm (10) according to claim 4, wherein the at least one cutout is positioned around a perimeter of the orifice (18), the position of said at least one cutout determining and being a function of an intended orientation of the fluid circulation hose (16) with respect to the top face (121) of the arm head (12).

6. The wiper arm (10) according to any one of claims 3 to 5, wherein the arm head comprises the at least one cutout (22) on the perimeter of the orifice (18) and the clip (20) comprises the at least one rib.

7. The wiper arm according to any one of claims 1 to 6, wherein the clip (20) further comprises a channel (28) guiding the hose (16) out of the orifice (18) with respect to the top face (121) of the arm head (12) and/or arms (30) guiding the hose out of the orifice with respect to the bottom face (122) of the arm head (12).

8. The wiper arm (10) according to any one of the claims 1 to 7, wherein the clip (20) further comprises clamping means (32) to fasten the clip to the arm head (12) by pressing the bottom face (122) of the arm head.

9. The wiper arm (10) according to any one of the claims 1 to 8, wherein the clip (20) further comprises at least one lug (34) for stabilizing the clip with respect to the arm head (12).

10. The wiper arm (10) according to any one of the claims 1 to 9, wherein the fluid circulation hose (16) is provided with a fluid connector (42) supported at a hose extremity (161), the orifice (18) being dimensioned such that the connector is suitable to pass through the orifice.

11. The wiper arm (10) according to any one of claims 1 to 10, wherein the wiper arm is a pre-assembled assembly.

12. A vehicle comprising a wiper system having a wiper arm (10) according to any one of the preceding claims.

13. The vehicle according to claim 12, wherein the arm head (12) comprises two cutouts (22) and the clip (20) comprises a rib (24), the clip immobilizing the hose within the orifice (18) in a fixed orientation with respect to the top face due to the engagement of the rib within one of the cutouts, the orientation being a function of the cutout into which the rib is engaged.

14. Method for assembling the wiper arm (10) according to any one of claims 1 to 11, comprising the steps of
• Providing a wiper arm (10) having an arm head (12) and an orifice (18) extending through the arm head, providing a fluid circulation hose (16) having a fluid connector (42) supported at an extremity of the hose, and providing a clip (20) for securing the fluid circulation hose through the orifice ;
• Fixing the fluid circulation hose (16) to a bottom face (122) of the arm head (12) by starting with the extremity of the hose that is free of the fluid connector
• Passing the connector and the extremity of the hose supporting the connector through the orifice towards a face of the arm head ; and
• Fixing the clip to the arm head such that the clip immobilizes the hose within the orifice in a fixed orientation with respect to the top face.

15. The method according to claim 14, wherein the arm head (12) comprises two cutouts (22) and the clip (20) comprises a rib (24), the clip immobilizing the hose (16) within the orifice (18) in a fixed orientation with respect to the face (121) as a function of the engagement of the rib within one of the cutouts, the cutout within which the rib is engaged depending on whether the vehicle is a left-hand-drive or a right-hand-drive vehicle.
